# FASCICULE DE BREVET EUROPEEN

(11) **EP 1 355 797 B1**
(45) Date de publication et mention de la délivrance du brevet: **22.03.2006**
(21) Numéro de dépôt: 02700383.9
(22) Date de dépôt: 23.01.2002
(51) Int. Cl.: B60J 10/02, B29C 45/14, B29C 70/76

(54) **PROCEDE ET DISPOSITIF POUR LA PRODUCTION D'UN PROFILE D'ARETE POUR UN VITRAGE**
VERFAHREN UND VORRICHTUNG ZUR HERSTELLUNG EINES KANTENPROFILS FÜR EINE VERGLASUNG
METHOD AND DEVICE FOR PRODUCING A PROFILED EDGE SECTION FOR A GLASS PANE

(30) Priorité: 30.01.2001 DE 10103865
(43) Date de publication de la demande: 29.10.2003
(73) Titulaire: SAINT-GOBAIN GLASS FRANCE, 92400 Courbevoie (FR)
(72) Inventeur: ORTEN, Thomas, 52159 Roetgen (DE); BISCHOF, Thomas, 52074 Aachen (DE); BEHREND, Ulrich, 52224 Stolberg (DE)
(74) Mandataire: Cardin, Elise
(86) Numéro de dépôt international: PCT/FR2002/000276
(87) Numéro de publication internationale: WO 2002/060713

(56) Documents cités:
- WO-A-00/17002
- US-A- 5 421 940
- PATENT ABSTRACTS OF JAPAN vol. 007, no. 047 (M-196), 24 février 1983 (1983-02-24) & JP 57 197139 A (HITACHI SEISAKUSHO KK), 3 décembre 1982 (1982-12-03)
- PATENT ABSTRACTS OF JAPAN vol. 012, no. 428 (M-762), 11 novembre 1988 (1988-11-11) & JP 63 162210 A (HASHIMOTO FORMING CO LTD), 5 juillet 1988 (1988-07-05)

## Description

L'invention se rapporte à un procédé pour la fabrication d'un profilé d'arête sur un vitrage selon la revendication 1, au dispositif correspondant selon la revendication et à un vitrage composite selon la revendication 20.

On connaît, à partir du document DE-C1-42 32 554, un procédé ayant ces caractéristiques de genre, lors duquel un vitrage de fenêtre en verre repose, pendant l'application du profité d'arête par extrusion d'un matériau polymère, sur ce que l'on appelle un lit de forme. Ce dernier se situe dans une zone d'arête du vitrage à sa surface inférieure et forme sur la face de pourtour du vitrage un prolongement de la surface inférieure du vitrage. La face frontale et la surface opposée du vitrage restent, pendant ce temps, libres. Le profilé d'arête est formé sous la forme d'un boyau le long de l'arête de la surface libre du vitrage et autour de l'arête du vitrage, et recouvre également la face frontale du vitrage. Grâce au lit de forme, le contour du profilé d'arête est limité de telle manière qu'il se prolonge à fleur de l'autre surface (du côté du lit de forme) du vitrage. Le procédé est décrit pour des vitrages de fenêtre en verre monolithiques.

On sait également mettre en place par extrusion (document DE-A1-43 26 650), sur un vitrage de fenêtre en verre monolithique, un profilé d'arête, qui agrippe au moins l'arête d'une des surfaces du vitrage ainsi que sa face frontale. Le profilé d'arête passe à fleur de la surface opposée du vitrage. Dans le cas de ce procédé, la buse d'extrusion elle-même - ou un prolongement disposé sur celle-ci, qui en est mécaniquement solidaire - constitue la limitation de la section transversale de profilé sur la surface du vitrage de fenêtre non recouverte par le profilé d'arête. Un lit de forme stationnaire n'est pas nécessaire dans ce cas.

Les profilés d'arête servent, dans une application préférée, à la mise en place dans une position correcte et à l'étanchéification des vitrages de fenêtre, qui sont collés dans les ouvertures de fenêtre de carrosseries de véhicules. Ils ne doivent pas, dans tous les cas, entourer le pourtour tout entier des vitrages, mais peuvent n'être prévus également que sur trois arêtes, dans des cas spéciaux que sur deux arêtes ou même que sur une seule d'entre elles, le cas échéant même que sur des sections partielles d'une seule arête. Ces profilés d'arête doivent, naturellement, adhérer fort bien aux vitrages - qui se composent la plupart du temps de verre, de plus en plus cependant aussi de matière plastique. Pour garantir cette bonne adhérence, les subjectiles doivent être propres, exempts de graisse, etc. Ils doivent, en outre, être revêtus, la plupart du temps, dans les zones correspondantes, de promoteurs d'adhésion, ce que l'on appelle aussi des agents d'apprêt. Il existe pour chaque matériau de profilés d'arête, un agent d'apprêt correspondant. Dans les publications indiquées ci-dessus, ceci est discuté d'une manière exhaustive, le profilé d'arête devant là aussi adhérer à la face de pourtour, c'est-à-dire aux faces frontales ou aux arêtes minces des vitrages de fenêtre.

Il faut dire clairement que le procédé à décrire ici peut être approprié non seulement à l'équipement de vitrages de fenêtre (transparents) à l'aide d'un profilé d'arête, mais aussi utilisé dans le cas d'autres substrats du genre vitrage.

S'il s'agit maintenant de pourvoir en particulier des vitrages composites (il s'agit là, dans le cas de véhicules, avant tout des vitrages avant ou des pare-brise, mais aussi, de plus en plus, des vitrages latéraux ou des vitrages arrières), constitués de plusieurs vitrages solides en verre et/ou en matière synthétique et de couches adhésives (organiques) intermédiaires, à l'aide de profilés d'arête enveloppants de ce genre, il peut se produire des bulles et/ou des décollements, quand les couches adhésives sont closes vers l'extérieur par le profilé d'arête qui y adhère. Ceci a été observé en particulier dans le cas des vitrages composites utilisés les plus fréquemment, qui se composent de deux vitrages en verre et d'une couche adhésive en polyvinylbutyral (PVB). Il peut se produire, en l'occurrence, la formation de bulles dans le PVB, après l'application du profité d'arête sur le vitrage composite. Les fabricants de véhicules désirent incorporer dans la carrosserie, avant tout, les pare-brise d'une manière aussi à fleur et aussi lisse que possible, sans fente d'arête, afin de minimiser la résistance au vent, les bruits causés par le vent et aussi la susceptibilité à la contamination et afin de parvenir à un aspect esthétiquement attirant.

On connaît également déjà un procédé (document DE-A1-42 29 090), lors duquel l'on forme ou l'on laisse libre, dans un vitrage en verre composite à couche adhésive en PVB, une fente d'arête périphérique dans le plan de la couche adhésive, dans laquelle, plus tard, l'on introduit un profilé à lèvres, fait d'un polymère, faisant saillie sur l'arête périphérique du vitrage composite. A cet effet, l'on procède au revêtement des surfaces enveloppantes de ladite fente d'arête à l'aide d'un promoteur d'adhésion. L'on procède ensuite à l'extrusion du matériau polymère, dans la fente d'arête et au-delà, en forme de col faisant saillie, à l'aide d'une buse d'extrusion étalonnée appropriée. Ce procédé n'a pas, toutefois, fait ses preuves en pratique.

Le document DE-A1-198 43 843 divulgue un vitrage de fenêtre à profilé d'arête ayant une section transversale particulière, qui adhère seulement à l'une des surfaces de ce vitrage de fenêtre, tout en recouvrant cependant une fente à section transversale partielle cunéiforme, restant libre, à l'état monté, dans une ouverture de fenêtre d'une carrosserie. L'on parvient ainsi également à un raccord approximativement à fleur du profilé d'arête à la surface de vitrage libre ainsi qu'à une transition lisse à la surface avoisinante de la carrosserie. En cas d'utilisation de ce profil, il faut faire preuve toutefois, lors de la procédure de montage, par comparaison aux profils mentionnés antérieurement, produits à l'aide d'un lit de forme, d'une plus grande attention, afin de placer ce dernier dans la position ultime prévue.

Le document US-A-5421940 divulgue un procédé selon le préambule de la revendication 1 et un dispositif selon le préambule de la revendication 14.

Le document WO-A-0017002 divulgue un vitrage selon le préambule de la revendication 20.

L'objet fondamental de l'invention est d'indiquer un procédé pour la fabrication d'un profilé d'arête sur un vitrage, en particulier sur un vitrage composite, par utilisation d'un lit de forme, grâce auquel il est possible d'exclure les influences réciproques entre les matériaux des couches adhésives du composite, d'une part, et du profilé d'arête, d'autre part. Il s'agit également d'indiquer un dispositif approprié à l'exécution du procédé ainsi qu'un vitrage composite pourvu d'un profilé d'arête de ce genre.

L'objet est résolu, en ce qui concerne le procédé selon l'invention, grâce aux caractéristiques de la revendication 1. Les caractéristiques de la revendication 14 indiquent un dispositif correspondant, approprié a l'exécution du procédé décrit ici selon l'invention et la revendication 20 indique un vitrage composite. Les caractéristiques des revendications secondaires, subordonnées à chaque fois aux revendications indépendantes, indiquent des perfectionnements avantageux du procédé ou du dispositif ou du vitrage composite.

Généralement partant, l'on utilise des agents pour empêcher l'adhérence du matériau polymère à la face frontale des vitrages de fenêtre, cette face frontale restant capable d'être ventilée. L'on fait cesser en particulier, lors de l'application du profilé d'arête sur des vitrages composites, tout contact adhérant direct entre le matériau polymère et la ou les couches adhésives composites. Cette ventilation est nécessaire, avant tout, lors de l'utilisation du PVB hygroscopique en tant que couche adhésive. Le procédé, indépendamment de ce qui précède, est naturellement utilisable sans autres, en cas de nécessité, également pour des vitrages monolithiques ainsi que pour d'autres substrats.

L'on utilise, en tant que matériau polymère, de préférence des polymères thermoplastiques comme des polyoléfines, des polymères vinyliques ou des polymères du styrène, le procédé étant toutefois aussi utilisable d'une manière sensée avec d'autres matériaux polymères, comme par exemple avec de polycondensats thermoplastiques.

Une mesure préférée pour empêcher l'adhérence consiste, tout d'abord, à n'appliquer aucun promoteur d'adhésion aux faces frontales du vitrage de fenêtre à pourvoir du profilé d'arête ou d'éliminer à nouveau ce dernier. Parce que ces faces frontales sont, en règle générale, polies de manière à être lisses, il en résulte déjà, sans traitement d'apprêt, une adhérence, au pis aller, faible du matériau polymère sur cette surface, qui peut être facilement détachée, le cas échéant, pendant le montage ultérieur du vitrage dans une carrosserie. Des mesures de ce genre n'étaient apparemment pas prises, dans le contexte de l'état de la technique de ce genre mentionné au début.

L'on pourrait également procéder au revêtement desdites faces frontales, avant l'application du matériau polymère, à l'aide d'un agent de séparation adhérant, qui doit être compatible de manière similaire avec le matériau du ou des vitrages, avec le matériau des couches adhésives et avec le polymère du profité d'arête. Si le profilé d'arête est prévu pour l'application ultérieure d'un matériau adhésif, grâce auquel le vitrage fini est collé dans une carrosserie de véhicule, il faut assurer une adhésion impeccable de l'adhésif de montage au matériau polymère. En tant qu'agents de séparation, on pourrait utiliser par exemple des cires minérales, de la craie, du mica, des stéarates métalliques, du polyéthylèneglycol. Les silicones sont également efficaces en tant qu'agent de séparation, tout en ayant cependant des propriétés négatives (migration, scellement superficiel, difficulté d'élimination), justement en ce qui concerne le collage direct mentionné, de sorte qu'elles ne sont utilisables, pour les applications dont il est question ici, que d'une manière limitée.

Dans un mode de réalisation particulièrement préféré, l'on fait cesser l'adhérence du matériau polymère sur la face frontale du vitrage de fenêtre par l'utilisation d'un masque sous forme de ruban, de bande ou de barrette, qui est mis en place sur la section de face frontale correspondante, au cours de la production du profilé d'arête, et qui en est retirée ou éliminée après sa solidification.

Dans le déroulement général de la fabrication du profilé d'arête ou du vitrage qui en est pourvu, l'on pourvoit, conformément à un mode de réalisation du procédé, la face frontale du vitrage, avant ou après sa mise en place sur le lit de forme, d'un masque, dont la largeur ou la hauteur correspond tout au moins à l'épaisseur du verre. L'on nettoie ensuite, d'une manière connue, le vitrage de fenêtre ou la surface opposée au lit de forme et l'on procède du côté de l'arête, dans la zone recouverte par le profilé en polymère, au revêtement à l'aide d'un promoteur d'adhésion / d'un agent d'apprêt, ledit masque empêchant le mouillage de la face frontale par l'agent d'apprêt. L'on applique maintenant le profilé d'arête, par exemple par extrusion ou pulvérisation directe. Une fois le matériau polymère devenu solide, l'on enlève à nouveau le masque.

La largeur du masque mentionné est à choisir de manière à ce que l'on puisse le saisir et le retirer, à la main ou d'une manière automatisée, par l'extrémité qui en dépasse, quand il reste encore sur le vitrage, après le soulèvement du vitrage hors du lit de forme. Dans un autre mode de réalisation, le masque est lié au lit de forme de telle manière que l'on puisse soulever le vitrage de fenêtre hors du lit de forme, après fabrication / solidification du profilé d'arête, le masque restant en place dans le lit de forme.

La surface de contact du masque par rapport à l'arête du vitrage est naturellement à exécuter de telle sorte qu'elle assure un effet d'étanchéification vis-à-vis de l'agent d'apprêt. Un appui à fleur de cette surface de contact (surface d'étanchéification) est particulièrement nécessaire lors d'un déport entre les vitrages individuels d'un vitrage composite. Le masque doit alors s'appuyer, d'une façon suffisamment étanche, sur la face frontale du vitrage individuelle (libre) se situant en haut. Il importe considérablement que la couche adhésive du vitrage composite n'entre pas en contact (étanche) avec le matériau polymère et que l'on puisse également procéder à une ventilation à partir du côté extérieur du vitrage monté. Il n'est, par contre, pas impérativement nécessaire de garder libre, sur toute la largeur du matériau polymère, la face frontale du vitrage retiré du lit de forme (orientée à l'état de montage en direction du compartiment des passagers).

Le masque est de préférence réutilisable à plusieurs reprises. Il est, en outre, résistant à la température, en particulier résistant aux températures d'activation nécessaires pour l'application de l'agent d'apprêt.

La surface d'étanchéification (du coté vitrage) mentionnée et la surface de contact (tournée vers le boyau de polymère), de l'autre côté, du masque peuvent posséder une structure superficielle, par exemple une cannelure fine perpendiculaire à l'extension longitudinale du profilé d'arête. Celle-ci facilite le retrait aussi pauvre en friction que possible du masque, après la fabrication du profilé d'arête, sans endommager le profilé ou le vitrage de fenêtre. Une forme légère en coin de la section transversale du masque facilite également son détachement de la fente (d'air) formée entre les faces frontales des vitrages et le profité d'arête fini.

Une partie du masque, faisant saille en tant que languette de prise pour le retrait, peut dépasser parallèlement à l'arête du verre, perpendiculairement au lit de forme. Des languettes de ce genre ne doivent pas s'étendre impérativement sur toute la longueur du masque, mais peuvent n'être prévues que par sections en tant que "manettes de prise". Elles peuvent être réalisées par exemple d'une manière si faible qu'elles se laissent inverser sans exercer une force, quand le vitrage pourvu du masque est placé sur le lit de forme. Il faut prévoir, de préférence, toutefois, un profité angulaire en tant que masque, qui est coudé, vers l'intérieur ou vers l'extérieur, environ à angle droit à la manière d'une flasque. Une section transversale en forme de T du profilé angulaire est également possible, le masque proprement dit étant formé à partir de la tige du T.

Si la zone qui dépasse vers l'extérieur (en partant du vitrage) est coudée, elle peut servir, en cas de profilage approprié, en tant qu'élément de mise en forme pour le boyau profilé. Si la zone qui dépasse est coudée vers l'intérieur, elle forme de manière avantageuse immédiatement l'appui pour l'arête située en bas du vitrage de fenêtre placé dans le lit de forme.

En tant que masque, l'on peut utiliser une bande mince souple, qui est fixée au vitrage de fenêtre grâce à des moyens appropriés, par exemple par collage temporaire amovible. Tout comme l'application du matériau polymère, cette procédure peut être mécanisée. Si le masque doit recouvrir la totalité du pourtour du vitrage, il peut être tendu sur la face frontale sur tout le pourtour, le cas échéant, en tant que bande souple, dans la mesure où l'arête du vitrage ne possède pas un dessin de pourtour par trop complexe (rayons de courbure, rétractions, évidements).

Dans un autre mode de réalisation, l'on peut utiliser, en tant que masque, une barrette rigide ou souple, reliée directement au lit de forme, qui épouse la forme de la face frontale correspondante du vitrage de fenêtre, dès que celle-ci est placée dans le lit de forme. Cette barrette peut également être exécutée par exemple en tant que lèvre élastique mince faite en un matériau suffisamment résistant. Le déroulement d'un masque à barrette positionné de manière fixe dans le lit de forme doit correspondre toutefois, très exactement, au contour de pourtour du vitrage de fenêtre à mettre en place, respectivement doit pouvoir compenser les déviations de dimensions, qui apparaissent inévitablement, des surfaces des vitrages d'une série, pour que n'apparaisse, entre le masque et la face frontale à recouvrir, aucun fente ou pour que n'apparaisse, tout au plus, qu'une fente minimale.

D'une manière connue, le lit de forme, respectivement sa surface de forme en contact avec la surface du vitrage, peut être recouvert d'une couche faite d'un matériau élastiquement déformable. Celui-ci sert de tampon entre les surfaces du vitrage et le lit de forme, la plupart du temps, métallique. Il épouse, entre autres choses, la surface du vitrage et rend possible une bonne étanchéification du lit de forme dans la zone de contact avec l'arête du vitrage. On pourrait maintenant également fabriquer le masque à partir de ce matériau élastique, le cas échéant, on pourrait l'exécuter d'une seule pièce avec la couche élastique présente de toute manière, le masque devant être réalisé en tant que barrette dépassant de la couche.

Grâce à des moyens appropriés, l'on pourrait aussi réaliser un masque, qui ne serait placé dans le lit de forme qu'après la mise en place et le positionnement du vitrage de fenêtre le long de l'arête à recouvrir et qui serait lié à celle-ci, le cas échéant, d'une manière adhésive. Il faut partir du principe qu'après la fixation nécessaire du vitrage de fenêtre, dans le lit de forme, aucune force trop élevée n'agit sur le masque, même pendant l'extrusion ou l'application du boyau profilé, effectuée pratiquement sans pression. Ce masque peut, le cas échéant, également adhérer légèrement à la face frontale du vitrage de fenêtre elle-même, si on garantit que ce masque, peut à nouveau être facilement retiré après la fabrication du boyau profilé.

Même si l'on décrit ici un vitrage placé dans le lit de forme, le procédé peut être effectué d'une manière équivalente également en position inclinée ou verticale sur des vitrages pressés contre un lit de forme.

La section transversale du boyau profité à former doit également être définie de manière précise du côté opposé au lit de forme. L'état de la technique, constituant le genre, discuté au début, divulgue diverses options en vue de la formation d'un canal de forme pour la section transversale profilée. L'on utilise, en partie, une forme supérieure fixe. On peut aussi cependant, en renonçant à une forme supérieure fixe, prescrire immédiatement par l'intermédiaire des contours des bords de sortie d'une buse d'extrusion étalonnée, la forme de section transversale du boyau profilé sur le côté opposé au lit de forme fixe. Pour l'exécution du procédé mentionné ici ainsi que pour le dispositif correspondant, entrent en ligne de compte toutes les formes d'exécution du canal de forme qui y sont divulgués. L'on peut utiliser, le cas échéant, des formes appropriées supplémentaires, en particulier des formes pleines en vue de l'injection du matériau polymère. Elles sont incluses dans la divulgation de cette demande. Il est entendu que des mesures sont à prendre, pour empêcher une adhérence quelconque du matériau polymère à l'une des formes fixes.

Un aspect attirant du point de vue du style du boyau profilé peut être obtenu, conformément à un perfectionnement du procédé, par utilisation d'un matériau polymère coloré, dont la couleur est adaptée à l'environnement de construction du vitrage, par exemple à une couleur d'une carrosserie, dans laquelle le vitrage est à incorporer après la production du boyau profilé. Le boyau profilé relativement large s'adapte de ce fait harmonieusement, du point de vue de la couleur, à son environnement.

Des détails et des avantages supplémentaires de l'objet de l'invention ressortent du dessin des exemples de réalisation et de leur description approfondie qui suit. Les détails du procédé et du dispositif en ce qui concerne l'apprêt, l'alimentation et l'application du matériau polymère pour former le boyau profilé importent peu ici. L'on renvoie également à ce sujet à l'état de la technique détaillé cité au début.

On montre, en représentation simplifiée,
- la figure 1 est une vue en coupe de la zone marginale d'un vitrage placé sur un lit de forme d'un dispositif d'extrusion, dont la face frontale dépassant du lit de forme est recouverte d'un masque sous forme de bande,
- la figure 2 est une représentation détaillée de la zone de l'arête frontale du vitrage de la figure 1, recouverte à l'aide d'un masque, avec un mode de réalisation supplémentaire du masque,
- la figure 3 est une représentation détaillée supplémentaire, similaire à la figure 2, avec encore un autre mode de réalisation du masque.

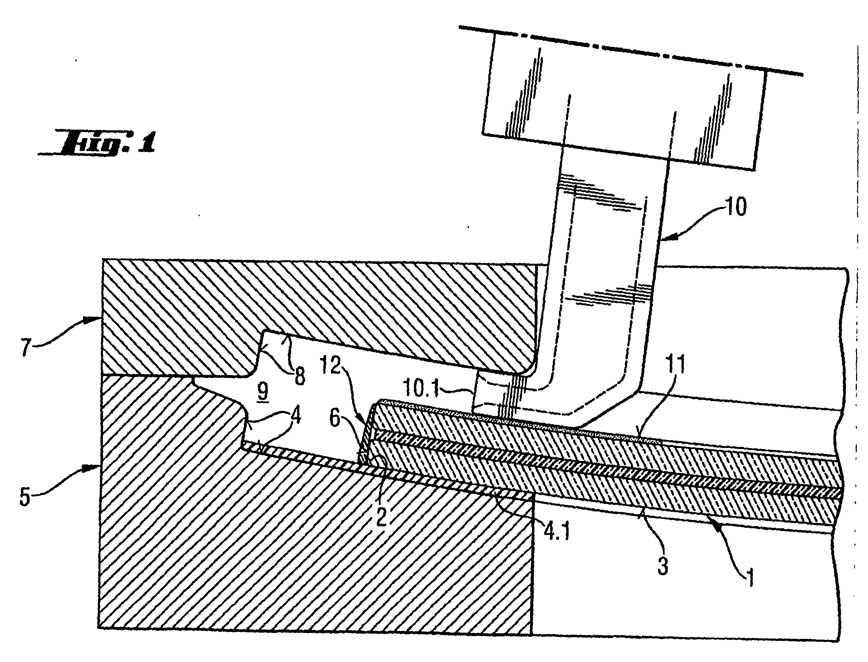

Conformément à la figure 1, un vitrage 1, exécuté en tant que vitrage composite, repose, avec une arête 2 de sa surface inférieure 3, sur une surface de forme 4 d'un lit de forme 5, de telle sorte que sa face frontale 6 dépasse de la surface de la forme. La zone de la surface de forme 4 qui est en contact avec le vitrage 1 est pourvue, d'une manière connue, d'une couche tampon 4.1, relativement mince, faite en un matériau élastiquement déformable. Le lit de forme 5 forme ainsi, d'une manière connue en soi, un appui, le cas échéant, périphérique pour le vitrage 1 et simultanément un prolongement de la surface du vitrage 1 par delà son pourtour. Il est entendu que le vitrage 1 peut également être positionné et fixé à l'aide de moyens appropriés sur un lit de forme non périphérique, quand il s'agit de ne fabriquer, par exemple, un boyau profilé que sur un secteur de pourtour partiel du vitrage 1.

La surface (convexe) du vitrage, s'appuyant sur le lit de forme 5, se situe, à l'état monté dans une carrosserie de véhicule, vers l'extérieur.

Au-dessus du lit de forme 5 est disposé une forme supérieure 7 démontable et amovible, avec une contre surface de forme 8. Elle se joint, d'une part, immédiatement à la surface de forme 4 du lit de forme, en tant que partie de la forme divisée globale, tout en se prolongeant, d'autre part, vers l'intérieur jusqu'au bord du vitrage 1. La surface de forme 4, la contre surface de forme 8 et la face frontale 6 définissent ensemble, d'une manière également connue, un canal de forme 9 ouvert, en vue de la fabrication, par extrusion, d'un boyau profilé, fait d'un matériau polymère.

Ce dernier est introduit, dans le cas présent, dans l'ouverture du canal de forme, à l'aide d'une buse d'extrusion étalonnée 10, seulement partiellement indiquée, de sorte qu'il puisse adhérer, sur une bande relativement mince du côté de l'arête, tout au moins à la surface du vitrage individuel placé en haut, opposée au lit de forme. Cette surface, en vue de l'amélioration de l'adhérence, a été pourvue d'un agent d'apprêt indiqué en tant que couche mince 11. Celui-ci peut être appliqué immédiatement sur le matériau du vitrage ou, le cas échéant, d'une manière connue sur le rebord de décoration opaque usuel du vitrage.

Les parois du canal de forme 9 définissent, conjointement aux arêtes d'embouchure 10.1 de la buse d'extrusion 10, la section transversale de consigne dudit boyau profité, qui est appliqué sur le vitrage 1, sur la totalité ou également seulement sur une partie de son pourtour. Dans l'extension longitudinale du boyau profilé, l'on peut, en outre, procéder à des variations de sa section transversale, dans le cas d'une réalisation correspondante des surfaces de forme et, le cas échéant, en cas de commande correspondante du flux de matériau provenant de la buse ou de sa vitesse d'avance. Les arêtes d'embouchure 10.1 de la buse d'extrusion peuvent naturellement aussi être formées d'une manière différente, comme cela est décrit dans l'état de la technique.

Comme il ressort du dessin, la surface de forme 4 constitue un prolongement "lisse" de la surface du vitrage 1 située par dessus. La transition lisse de la surface du vitrage se raccorde par conséquent également de manière exacte sans brisure à la surface (située, à l'état monté, à l'extérieur) du boyau profilé. L'on peut également fabriquer, dans cette zone de transition, bien entendu toutefois, selon des exigences de nature stylistique et/ou technique, des transitions "à brisure" et d'autres conceptions, le cas échéant, même des gradins. Dans tous les cas, il faut considérer la surface du boyau profilé correspondant, formée par le lit de forme 5, respectivement par les surfaces de forme 4 /4.1 comme représentant un prolongement de la surface 3 du vitrage 1.'

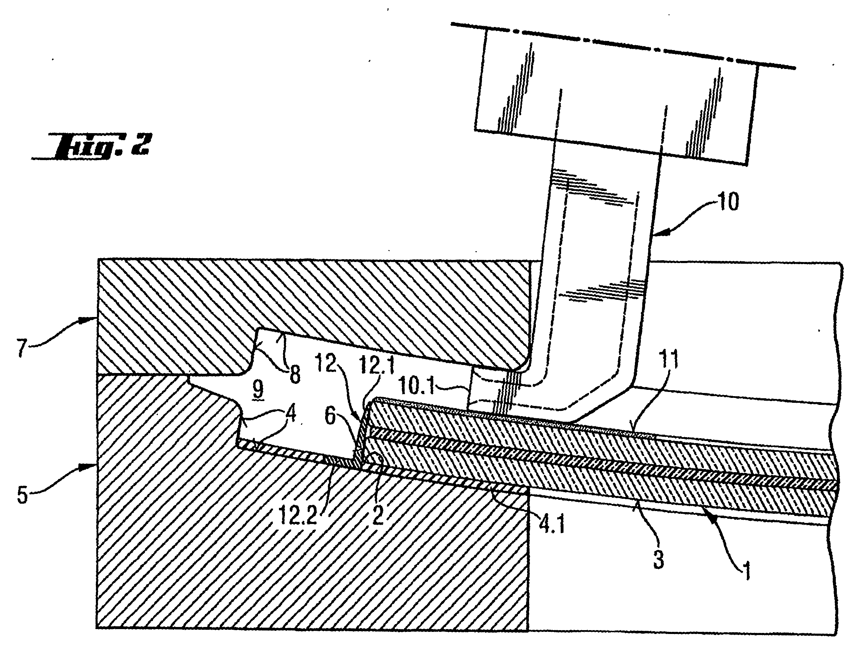

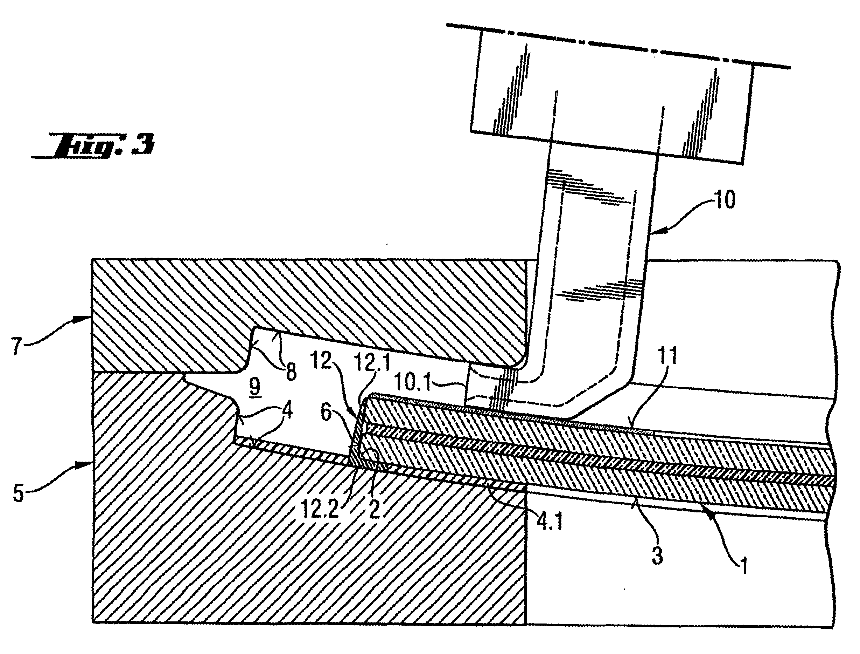

La face frontale 6 du vitrage 1 est, dans le cas présent, pourvue d'un masque 12 sous la forme d'une barrette ou d'une bande mise en place, la plus mince possible, dépassant librement qui empêche non seulement l'application du promoteur d'adhésion sur la face frontale 6, mais aussi le contact entre le matériau polymère (encore à appliquer, non indiqué seulement pour des raisons de clarté) du boyau profilé et de la même face frontale 6. Les figures 2 et 3 fournissent, à titre d'élucidation plus approfondie, des représentations détaillées d'autres modes de réalisation du masque 12 sur la face frontale 6.

La découpe en figure 2 explique que le masque 12 est exécuté en tant que profilé angulaire, dont un côté 12.1 constitue le masque proprement dit, et dont l'autre côté 12.2 est disposé sur le lit de forme 5. Le côté de masque 12.1 s'appuie, à l'aide d'une sorte de lèvre étanche, sur la face frontale du vitrage individuelle située en haut du vitrage composite 1. Il n'est pas impérativement nécessaire, comme indiqué déjà antérieurement, de maintenir libre de matériau polymère la face frontale totale du vitrage située en haut (à l'état monté, avec une orientation vers le compartiment des passagers). On reconnaît en outre que la section transversale du côté servant de masque 12.1 possède une forme cunéiforme légère, s'amincissant notamment à partir du lit de forme vers l'extrémité (supérieure) libre. L'on simplifie aussi de ce fait le retrait de ce côté d'entre le boyau profilé (solidifié) et le vitrage 1.

Le deuxième côté 12.2 du profilé angulaire est coudé ici à la manière d'une flasque vers la direction opposée au vitrage 1, de sorte que sa face supérieure forme également une section partielle de la paroi du canal de forme 9. Cette face supérieure se situe, dans le cas présent, à fleur de la surface de forme 4 du lit de forme 5, plus précisément dans la couche 4.1 faite en matériau élastique. Elle pourrait cependant également en dépasser légèrement et former, par conséquent, dans le boyau profilé, une rainure plate, le long de sa ligne de contact avec la face frontale 6 du vitrage 1. Entre la face frontale 6 et le masque 12, l'on peut prévoir - dans tous les modes de réalisation - une liaison adhésive, amovible pour garantir l'appui du masque sur la face frontale pendant la fabrication du boyau profilé. L'on peut également prévoir une liaison adhésive amovible entre le côté 12.2 et la surface de forme 4.

Dans la représentation détaillée selon la figure 3, le deuxième côté 12.2 du profilé angulaire est coudée vers le vitrage 1 de telle sorte que l'arête du vitrage s'appuie sur la face supérieure de ce côté. Le canal de forme n'est déterminé, de ce fait, à l'exception du côté mince 12.1 formant le masque, que par les surfaces de forme 4/4.1 et 8. Le deuxième côté 12.2 est intégré, à nouveau, d'une manière à fleur dans la couche 4.1. L'on évite ainsi que le boyau profilé, respectivement sa surface formée du lit de forme, se raccordant à la surface 3 du vitrage, forme un gradin avec la surface du vitrage.

Dans toutes les exécutions, l'on peut introduire le matériau polymère dans le canal de forme 9 par l'intermédiaire d'une buse d'extrusion, de préférence conduite par un robot, conformément au positionnement correct du vitrage 1 et du masque 12, de manière à pouvoir remplir complètement sa section transversale à l'aide du matériau polymère.

Après la fabrication et la solidification du boyau profilé et le retrait de la forme supérieure 7, l'on peut soulever le vitrage 1 hors du lit de forme 5, le masque 12 étant retiré simultanément de la fente formée. Une adhérence du boyau profilé ou du matériau polymère, avec lequel il est fabriqué, sur la face frontale du vitrage composite est empêchée ainsi d'une manière fiable. L'on peut, indépendamment de ce qui précède, appuyer le boyau profilé, le cas échéant, sous déformation élastique, de manière lâche, sur la face frontale 6 du vitrage 1 et clore complètement du point de vue optique la fente qui est, en tout état de cause, très mince. Ceci sera alors en particulier le cas à l'état monté, quand le boyau profilé (comme indiqué dans les dessins) est pourvu d'une lèvre faisant saillie, qui repose dans une carrosserie, en étanchéifiant et en centrant, sur une flasque d'une ouverture de fenêtre et qui exerce de ce fait, sur le boyau profilé, une certaine force de pression dirigée vers le vitrage.

A la place de la buse d'extrusion, l'on peut utiliser, en vue de l'alimentation du matériau polymère dans le canal de forme, également un dispositif de pulvérisation, quand le canal de forme est clos dans la zone de la face supérieure du vitrage 1, à l'exception des orifices d'alimentation pour le matériau polymère. Il n'en résulte de ce fait, pour ce qui est du masque et de la protection de la face frontale du vitrage contre l'adhérence du matériau polymère, aucune modification substantielle.

## Revendications

1. Procédé pour la fabrication d'un boyau profilé, fait d'un matériau polymère, sur un vitrage (1), lors duquel au moins une section partielle d'une zone de bord ou d'arête d'une surface (3) du vitrage est en contact avec un lit de forme (4, 5), dont la surface de forme (4) constitue un prolongement de cette surface au-delà de son pourtour, le matériau polymère étant appliqué d'une manière adhérente sur au moins une partie du pourtour de la surface du vitrage opposée au lit de forme, de telle manière que le boyau profilé fasse saillie au-delà du pourtour extérieur du vitrage et recouvre également la face frontale (6) faisant saillie du lit de forme, ses dimensions extérieures étant définies également par la surface de forme du lit de forme, **caractérisé en ce que** l'on utilise des moyens pour empêcher une adhérence du matériau polymère ou du boyau profité formé à partir de celui-ci sur la face frontale du vitrage, recouverte par le boyau.

2. Procédé selon la revendication 1, dans lequel la face frontale du vitrage n'est pas revêtue d'un promoteur d'adhésion ou un promoteur d'adhésion de ce genre est éliminé des faces frontales avant l'application du boyau profilé.

3. Procédé selon la revendication 1 ou 2, dans lequel les faces frontales du vitrage sont revêtues d'un agent de séparation.

4. Procédé selon l'une quelconque des revendications précédentes, dans lequel on place, sur la face frontale (6) du vitrage, avant l'application du boyau profilé, un masque (12), qui empêche le revêtement de la face frontale à l'aide d'un promoteur d'adhésion et/ou l'adhérence du matériau polymère à cette surface frontale.

5. Procédé selon la revendication 4 dans lequel le masque (12) est fixé d'une manière amovible à la face frontale (6) du vitrage et/ou au lit de forme (5).

6. Procédé selon la revendication 4 ou 5, dans lequel utilise en tant que masque une bande mince souple.

7. Procédé selon la revendication 4 ou 5 dans lequel utilise, en tant que masque, un profilé angulaire, dont un côté (12.1) forme le masque proprement dit et dont l'autre côté (12.2) est en contact avec le lit de forme.

8. Procédé selon la revendication 7, dans lequel l'autre côté du profilé angulaire est utilisé en tant que partie de la surface de forme, en ce qu'il dépasse du disque appuyé sur le lit de forme de manière parallèle au lit de forme.

9. Procédé selon la revendication 7, dans lequel l'autre côté du profilé angulaire est utilisé en tant qu'appui pour le rebord du disque appuyé sur le lit de forme, en coudant celui-ci vers le rebord et soutenant le rebord.

10. Procédé selon l'une quelconque des revendications précédentes, dans lequel le matériau polymère est déposé sur le disque et dans le lit de forme à l'aide d'une buse d'extrusion, de préférence étalonnée.

11. Procédé selon l'une quelconque des revendications 1 à 9, dans lequel le matériau polymère est déposé sur le vitrage et dans le lit de forme à l'aide d'un moule à injection, qui définit la section transversale du boyau profilé d'une manière complémentaire au lit de forme.

12. Procédé selon l'une quelconque des revendications précédentes, dans lequel on utilise un matériau polymère thermoplastique en vue de la fabrication du boyau profilé.

13. Procédé selon l'une quelconque des revendications précédentes, dans lequel on utilise un matériau polymère adapté, en terme de couleur, à l'environnement de montage du vitrage, en particulier à la couleur d'une carrosserie, dans laquelle le vitrage est à monter après la fabrication du boyau profilé.

14. Dispositif, en particulier en vue de l'exécution du procédé selon l'une quelconque des revendications précédentes, en vue de la fabrication d'un boyau profité, fait d'un matériau polymère de préférence thermoplastique, sur un vitrage (1), avec un lit de forme (5) en vue de l'appui d'au moins une zone de rebord ou d'arête d'une surface (3) du vitrage, dont la face de forme (4, 4.1) constitue un prolongement de cette surface (3) au-delà de son pourtour, avec un outil (10) pour l'application du matériau polymère sur au moins une partie du pourtour de la surface opposée au lit de forme du vitrage (1), de telle sorte que l'on produit, en tant que prolongement de la surface (3) du vitrage (1) s'appuyant sur le lit de forme (5), un boyau profilé à dimensions externes définies, dépassant du pourtour du vitrage (1) et délimité par la surface de forme du lit de forme, qui recouvre également la face frontale (6) du vitrage dépassant du lit de forme (5), **caractérisé en ce que** l'on prévoit en outre un masque (12) pour l'appui sur la face frontale (6) du vitrage avant l'application du boyau profilé, qui empêche le revêtement de la face frontale (6) à l'aide d'un promoteur d'adhésion et/ou l'appui de ce boyau profilé à cette face frontale.

15. Dispositif selon la revendication 14, dans lequel le masque est formé d'une bande entourant la face frontale (6) du vitrage (1).

16. Dispositif selon la revendication 14 ou 15, dans lequel le masque est pourvu au moins d'un prolongement faisant saillie au moins hors de la fente entre le vitrage et le boyau profilé.

17. Dispositif selon l'une quelconque des revendications précédentes, dans lequel le masque (12) est formé par un côté (12.1) d'un profilé angulaire, dont l'autre côté est en contact avec le lit de forme (5), respectivement avec sa face de forme (4, 4.1).

18. Dispositif selon l'une quelconque des revendications précédentes, dans lequel les surfaces du masque (12) possèdent une structure superficielle réduisant la friction entre le matériau polymère et le matériau de la vitre d'une part, et le masque, d'autre part.

19. Dispositif selon l'une quelconque des revendications précédentes, dans lequel la section transversale du masque (12, 12.1) présente une forme cunéiforme en vue de faciliter son détachement de la fente (d'air) formée entre la face frontale (6) du vitrage et le boyau profilé fini.

20. Vitrage composite (1) ayant au moins deux vitres rigides et une couche adhésive reliant ces dernières, avec un boyau profilé fait d'un matériau polymère, appliqué sur une surface d'une des vitres rigides de telle manière que le boyau profilé fait saillie au-delà du pourtour du vitrage et recouvre également la face frontale (6) du vitrage de celui-ci et est en prolongement de la surface du vitrage rigides opposé **caractérisé en ce qu'**il n'y pas de liaison adhésive entre le boyau et la couche adhésive reliant les deux vitres rigides.

21. Vitrage composite (1) selon la revendication 20, dont le boyau profilé est coloré en vue de l'adaptation en terme de couleur à l'environnement de montage du vitrage.

## Patentansprüche

1. Verfahren zum Herstellen eines Profilstrangs aus einem Polymermaterial an einer Scheibe (1), bei dem wenigstens ein Teilabschnitt eines Rand- oder Kantenbereichs einer Oberfläche (3) der Scheibe mit einem Formbett (4, 5) in Berührung ist, dessen Formfläche (4) eine Fortsetzung dieser Oberfläche über deren Umfang hinaus bildet, wobei das Polymermaterial auf zumindest einen Teil des Umfangs der vom Formbett abgewandten Oberfläche der Scheibe haftend derart aufgebracht wird, dass der Profilstrang über den äußeren Umfang der Scheibe hinaus ragt und auch die vom Formbett abragende Stirnfläche (6) der Scheibe überdeckt, wobei seine Außenabmessungen auch von der Formfläche des Formbetts definiert werden, **dadurch gekennzeichnet, dass** Mittel zum Verhindem eines Anhaftens des Polymermaterials oder des daraus hergestellten Profilstrangs an der von ihm überdeckten Stirnfläche der Scheibe eingesetzt werden.

2. Verfahren nach Anspruch 1, in welchem die Stirnfläche der Scheibe nicht mit einem Haftvermittler beschichtet wird oder ein solcher Haftvermittler von den Stirnflächen vor dem Aufbringen des Profilstrangs entfernt wird.

3. Verfahren nach Anspruch 1, in welchem die Stirnflächen der Scheibe mit einem Trennmittel beschichtet werden.

4. Verfahren nach einem der vorstehenden Ansprüche, in welchem an die Stirnfläche (6) der Scheibe vor dem Aufbringen des Profilstrangs eine Maske (12) angelegt wird, welche das Beschichten der Stirnfläche mit einem Haftvermittler und/oder das Anhaften des Polymermaterials an dieser Stirnfläche verhindert.

5. Verfahren nach Anspruch 4, in welchem die Maske (12) an der Stirnfläche (6) der Scheibe oder / und an dem Formbett (5) lösbar befestigt wird.

6. Verfahren nach Anspruch 4 oder 5, in welchem als Maske ein dünnes flexibles Band verwendet wird.

7. Verfahren nach Anspruch 4 oder 5, in welchem als Maske ein Winkelprofil verwendet wird, dessen einer Schenkel (12.1) die eigentliche Maske bildet und dessen anderer Schenkel (12.2) mit dem Formbett in Berührung steht.

8. Verfahren nach Anspruch 7, in welchem der andere Schenkel des Winkelprofils als Teil der Formfläche genutzt wird, indem er von der am Formbett anliegenden Scheibe parallel zum Formbett abragt.

9. Verfahren nach Anspruch 7, in welchem der andere Schenkel des Winkelprofils als Auflage für die Kante der am Formbett anliegenden Scheibe genutzt wird, indem er zu dieser hin abgekröpft ist und die Kante unterfängt.

10. Verfahren nach einem der vorstehenden Ansprüche, in welchem das Polymermaterial mithilfe einer vorzugsweise kalibrierten Extruderdüse auf der Scheibe und in das Formbett abgelegt wird.

11. Verfahren nach einem der vorstehenden Ansprüche 1 bis 9, in welchem das Polymermaterial auf der Scheibe und in das Formbett mithilfe einer Spritzform abgelegt wird, welche komplementär zu dem Formbett den Querschnitt des Profilstrangs definiert.

12. Verfahren nach einem der vorstehenden Ansprüche, in welchem ein thermoplastisches Polymermaterial zum Erzeugen des Profilstrangs verwendet wird.

13. Verfahren nach einem der vorstehenden Ansprüche, in welchem ein farblich auf eine Einbauumgebung der Scheibe abgestimmtes Polymermaterial verwendet wird, insbesondere auf die Farbe einer Karosserie abgestimmt, in welche die Scheibe nach dem Herstellen des Profilstrangs einzubauen ist.

14. Vorrichtung, insbesondere zum Ausführen des Verfahrens nach einem der vorstehenden Ansprüche, zum Herstellen eines Profilstrangs aus einem vorzugsweise thermoplastischen Polymermaterial an einer Scheibe (1), mit einem Formbett (5) zum Anlegen wenigstens eines Rand- oder Kantenbereichs einer Oberfläche (3) der Scheibe, dessen Formfläche (4, 4.1) eine Fortsetzung dieser Oberfläche (3) über deren Umfang hinaus bildet, mit einem Werkzeug (10) zum Aufbringen des Polymermaterials auf zumindest einem Teil des Umfangs der vom Formbett abgewandten Oberfläche der Scheibe (1) derart, dass ein über den Umfang der Scheibe (1) hinausragender und von der Formfläche des Formbetts begrenzter Profilstrang mit definierten Außenabmessungen als Fortsetzung der am Formbett (5) anliegenden Oberfläche (3) der Scheibe (1) erzeugt wird, welcher auch die vom Formbett (5) abragende Stirnfläche (6) der Scheibe überdeckt, **dadurch gekennzeichnet, dass** ferner eine Maske (12) zum Anlegen an die Stirnfläche (6) der Scheibe vor dem Aufbringen des Profilstrangs vorgesehen ist, welche das Beschichten der Stirnfläche (6) mit einem Haftvermittler und/oder das Anlegen des Profilstrangs an diese Stirnfläche verhindert.

15. Vorrichtung nach Anspruch 14, in welcher die Maske als die Stirnfläche (6) der Scheibe (1) umspannendes Band ausgebildet ist.

16. Vorrichtung nach Anspruch 14 oder 15, in welcher die Maske mit mindestens einem aus dem Spalt zwischen der Scheibe und dem Profilstrang ragenden Fortsatz versehen ist.

17. Vorrichtung nach einem der vorstehenden Vorrichtungsansprüche, in welcher die Maske (12) durch einen Schenkel (12.1) eines Winkelprofils gebildet ist, dessen anderer Schenkel mit dem Formbett (5) bzw. dessen Formfläche (4, 4.1) in Kontakt steht.

18. Vorrichtung nach einem der vorstehenden Vorrichtungsansprüche, in weicher die Flächen der Maske (12) eine die Reibung zwischen Polymermaterial und Scheibenmaterial einerseits und der Maske andererseits verringernde Oberflächenstruktur besitzen.

19. Vorrichtung nach einem der vorstehenden Vorrichtungsansprüche, in welcher der Querschnitt der Maske (12, 12.1) eine Keilform zum Unterstützen von deren Auslösen aus dem zwischen der Scheiben-Stimfläche (6) und dem fertigen Profilstrang gebildeten (Luft-) Spalt aufweist.

20. Verbundscheibe (1), mit mindestens zwei starren Scheiben und einer diese verbindenden Klebeschicht, mit einem auf die Fläche einer starren Scheibe derart aufgebrachten Profilstrang aus einem Polymermaterial, dass der Profilstrang den Umfang der Scheibe überragt und gleichzeitig die Scheiben-Stirnfläche (6) bedeckt und eine Verlängerung der Fläche der starren, gegenüberliegenden Verglasung ist, **dadurch gekennzeichnet, dass** es keine adhäsive Verbindung zwischen dem Strang und der die beiden starren Scheiben verbindenden Klebeschicht gibt.

21. Verbundscheibe (1) nach Anspruch 20, deren Profilstrang zur farblichen Abstimmung auf eine Einbauumgebung der Scheibe eingefärbt ist.

## Claims

1. Process for manufacturing a profiled surround, made of a polymer material, on a window (1), during which at least one partial section of an edge region of a surface (3) of the window is in contact with a moulding bed (4, 5), the mould surface (4) of which constitutes an extension of this surface beyond its perimeter, the polymer material being applied so as to adhere to at least one part of the perimeter of the surface of the window on the opposite side from the moulding bed, in such a way that the profited surround projects beyond the outer perimeter of the window and also covers the edge face (6) projecting from the moulding bed, its external dimensions also being defined by the mould surface of the moulding bed, **characterized in that** means are used to prevent adhesion of the polymer material or of the profiled surround formed from the latter to that edge face of the window which is covered by the surround.

2. Process according to Claim 1, wherein the edge face of the window is not coated with an adhesion promoter or in that an adhesion promoter of this kind is removed from the edge faces before the profiled surround is applied.

3. Process according to Claim 1 or 2, wherein the edge faces of the window are coated with a release agent.

4. Process according to any one of the preceding claims, wherein a mask (12) is placed on the edge face (6) of the window before the profiled surround is applied, this mask preventing the edge face from being coated with an adhesion promoter and/or preventing the polymer material adhering to this edge surface.

5. Process according to Claim 4, wherein the mask (12) is removably fastened to the edge face (6) of the window and/or to the moulding bed (5).

6. Process according to Claim 4 or 5, wherein a thin flexible band is used as mask.

7. Process according to Claim 4 or 5, wherein an angled strip is used as mask, one side (12.1) of the strip forming the actual mask and the other side (12.2) of the strip being in contact with the moulding bed.

8. Process according to Claim 7, wherein the other side of the angled strip is used as part of the moulding surface and in that it projects from the disc pressed against the moulding bed so as to be parallel with the moulding bed.

9. Process according to Claim 7, wherein the other side of the angled strip is used as a bearing surface for the rim of the disc pressed against the moulding bed, angling this towards the rim and supporting the rim.

10. Process according to any one of the preceding claims, wherein the polymer material is deposited on the disc and in the moulding bed by means of an extrusion nozzle, preferably a gauged one.

11. Process according to any one of Claims 1 to 9, wherein the polymer material is deposited on the window and in the moulding bed by an injection mould, which defines the cross section of the profiled surround in a manner complementary to the moulding bed.

12. Process according to any one of the preceding claims, wherein a thermoplastic polymer material is used for the purpose of manufacturing the profiled surround.

13. Process according to any one of the preceding claims, wherein use is made of a polymer material matched, in terms of colour, to the surroundings of the window when mounted, in particular to the colour of the bodywork in which the window is to be mounted after the profiled surround has been manufactured.

14. Device, particularly for implementing the process according to any one of the preceding claims, for the purpose of manufacturing a profiled surround, made of a polymer material, preferably a thermoplastic, on a window (1), using a moulding bed (5) for supporting at least one rim or edge region of a surface (3) of the window, the mould surface (4, 4.1) of which constitutes an extension of this surface (3) beyond its perimeter, with a tool (10) for applying the polymer material to at least a portion of the perimeter of that surface of the window (1) which is on the opposite side from the moulding bed, in such a way that a profiled surround having defined external dimensions is produced, as an extension of that surface (3) of the window (1) which bears on the moulding bed (5), the said surround extending beyond the perimeter of the window (1) and being bounded by the mould surface of the moulding bed, which also covers the edge face (6) of the window projecting from the moulding bed (5), **characterized in that** a mask (12) is furthermore provided for bearing against the edge face (6) of the window before the profiled surround is applied, which mask prevents the edge face (6) from being coated with an adhesion promoter and/or prevents this profiled surround bearing against this edge face.

15. Device according to Claim 14, wherein the mask is formed of a band going around the edge face (6) of the window (1).

16. Device according to Claim 14 or 15, wherein the mask is provided with at least one extension protruding at least from the slot between the window and the profiled surround.

17. Device according to any one of the preceding claims, wherein the mask (12) is formed by a side (12.1) of an angled strip, the other side of which is in contact with the moulding bed (5) or alternatively with its mould surface (4, 4.1).

18. Device according to any one of the preceding claims, wherein the surfaces of the mask (12) have a surface structure which reduces the friction between the polymer material and the material of the window on the one hand, and the mask on the other.

19. Device according to any one of the preceding claims, wherein the cross section of the mask (12, 12.1) has a cuneiform shape for the purpose of making it easier to detach it from the (air) slot formed between the edge face (6) of the window and the finished profiled surround.

20. Composite window (1), having at least two rigid panes and an adhesive layer linking the latter, with a profiled surround made of a polymer material applied to one surface of one of the rigid panes in such a way that the profiled surround extending beyond the perimeter of the window (1) and also covers the edge face (6) of the window and is an extension of the surface of the opposed rigid pane, **characterized in that** there is no adhesive bonding between the surround and the adhesive layer linking the two rigid panes.

21. Composite window (1) according to Claim 20, the profiled surround of which is coloured for the purpose of matching it in terms of colour to the surroundings of the window when mounted.
